# FASCICULE DE BREVET EUROPEEN

(11) **EP 4 394 020 B1**
(45) Date de publication et mention de la délivrance du brevet: **16.07.2025**
(21) Numéro de dépôt: 22217090.4
(22) Date de dépôt: 29.12.2022
(51) Int. Cl.: C10M 107/38

(54) **SUBSTRAT COMPRENANT UNE SURFACE RECOUVERTE D'UN AGENT ÉPILAME ET PROCÉDÉ D ÉPILAMAGE D'UN TEL SUBSTRAT**
SUBSTRAT MIT EINER MIT EINEM EPILAMMITTEL BESCHICHTETEN OBERFLÄCHE UND VERFAHREN ZUM EPILAMIEREN EINES SOLCHEN SUBSTRATS
SUBSTRATE COMPRISING A SURFACE COATED WITH AN EPILAME AGENT AND METHOD FOR EPIMERISING SUCH A SUBSTRATE

(43) Date de publication de la demande: 03.07.2024
(73) Titulaire: The Swatch Group Research and Development Ltd, 2074 Marin (CH)
(72) Inventeur: AYER, Mathieu, 1740 Neyruz (CH); LETONDOR, Christophe, 2525 Le Landeron (CH)
(74) Mandataire: ICB SA

(56) Documents cités:
- EP-A1- 3 070 133

## Description

### Domaine technique de l'invention

La présente invention se rapporte à un substrat comprenant une surface dont au moins une partie est recouverte d'un agent épilame. L'invention se rapporte aussi aux procédés d'épilamage d'un tel substrat.

### Arrière-plan technologique

Il existe différents procédés pour modifier l'état de surface d'un substrat par un traitement au moyen d'un agent approprié de manière à améliorer spécifiquement certaines propriétés de surface. Par exemple, dans le domaine de la mécanique, et en particulier dans le domaine de l'horlogerie, mais aussi dans le domaine de la bijouterie, l'épilamage d'une surface d'une pièce ou d'un élément est souvent réalisé au moyen d'un agent épilame afin de contrôler et de réduire l'énergie de surface de ladite surface au cours de son utilisation. Plus particulièrement, un agent épilame a pour but d'empêcher l'étalement des huiles ou lubrifiants sur les éléments d'une pièce d'horlogerie ou de bijouterie en formant une surface hydrophobe et oléophobe permettant au lubrifiant de rester à un endroit prédéterminé de la surface traitée.

Toutefois, les substances utilisées actuellement pour l'épilamage présentent différents inconvénients. Par exemple, les agents épilames du type Fixodrop^{®} ES/BS de Moebius^{®} ou de la gamme Novec^{™} de 3M^{™} présentent une résistance aux lavages horlogers trop faible.

La demande de brevet US2012/0088099 résout partiellement ce problème en proposant d'utiliser un agent épilame porteur d'une fonction catéchol en bout de chaine. Cette fonction catéchol est capable de se fixer solidement à la surface de certains substrats, mais ne présente pas une résistance aux lavages horlogers améliorée pour des substrats tel que de l'or et de l'acier, qui sont des substrats très fréquents dans le domaine de l'horlogerie ou de la bijouterie. Ainsi, l'utilisation des agents épilames connus est généralement limitée à certains matériaux, ce qui oblige l'utilisateur à avoir à sa disposition différents types d'agents épilames en fonction de la nature des surfaces à traiter.

Une solution pour résoudre ce problème est décrite par exemple dans la demande de brevet WO 2012/085130. Cette solution consiste à utiliser comme composition épilame un mélange de composés de nature différente (thiol et biphosphonique) dont l'effet synergique favorise l'adhésion de l'épilame sur le substrat. Toutefois, la synthèse de chacun de ces composés nécessite au moins quatre étapes, de sorte que le procédé de synthèse pour l'ensemble de la composition épilame est long et complexe.

Une autre solution est décrite par exemples dans les brevets EP 3 070 133 et EP 3 070 152. Le brevet EP 3 070 133 décrit un agent épilame comprenant un copolymère statistique comprenant un motif fluoré, un motif d'ancrage et optionnellement une chaine hydrocarbonée additionnelle. Le brevet EP 3 070 152 décrit un agent épilame comprenant un copolymère bloc comprenant un motif fluoré, un motif d'ancrage et optionnellement une chaine hydrocarbonée additionnelle. En particulier, les motifs fluorés du type -C₅F₁₁ et -C₆F₁₃ sont décrits.

Néanmoins, l'acide perfluorohexanoïque (PFHxA, CAS 307-24-4), ses sels et les substances apparentées sont sous une pression règlementaire générale pour des raisons environnementales.

### Résumé de l'invention

L'invention a notamment pour objectif de pallier les différents inconvénients des agents épilames et des procédés d'épilamage connus.

Plus précisément, un objectif de l'invention est de fournir un agent épilame qui est considéré comme n'étant pas sous pression règlementaire générale pour des raisons environnementales.

L'invention a également pour objectif de fournir un agent épilame offrant une résistance aux lavages accrue par rapport aux agents épilames connus. L'invention a également pour objectif de fournir un agent épilame universel pouvant être utilisé pour tout type de matériau.

L'invention a également pour objectif de fournir un procédé d'épilamage écologique permettant de supprimer l'utilisation d'une quantité importante de solvants fluorés polluants. L'invention a également pour objectif de fournir un procédé d'épilamage économique permettant de supprimer l'utilisation d'une quantité importante de solvants fluorés onéreux.

L'invention a également pour objectif de fournir un agent épilame ainsi qu'un procédé d'épilamage qui permettent de connaître de manière précise la concentration en agent épilame au cours du temps, afin d'apporter de la robustesse au procédé global d'épilamage.

A cet effet, un premier aspect de la présente invention concerne un substrat comprenant une surface dont au moins une partie est recouverte d'un agent épilame selon les revendications annexées.

Selon l'invention, l'agent épilame comprend au moins un composé sous la forme d'un copolymère comprenant des unités M et des unités N. Ces unités M et ces unités N sont associées par liaisons covalentes par leurs chaines principales.

Selon l'invention, M est 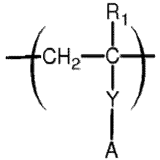 , où
R₁, identique ou différent, est H, un groupe alkyle en C₁-C₁₀, ou un groupe alkényle en C₂-C₁₀, et de préférence H ou CH₃,
Y, identique ou différent, est un bras espaceur constitué d'un hétéroatome ou d'une chaine hydrocarbonée contenant au moins un hétéroatome, linéaire ou ramifiée, comprenant au moins un atome de carbone, et
A, identique ou différent, constitue un groupement d'ancrage au substrat.

Avantageusement, Y, identique ou différent, est choisi parmi le group comprenant des groupes esters en C₁-C₂₀, des groupes amides, et des groupes dérivés du styrène. Optionnellement, Y, identique ou différent, comprend au moins un hétéroatome.

Avantageusement, A est choisi parmi le groupe comprenant le glycidyle, les thiols, thioéthers, thioesters, sulfures, thioamides, silanols, alkoxysilanes, halogénures de silane, hydroxyles, phosphates, acides phosphoniques protégés ou non, phosphonates protégés ou non, amines, ammoniums, hétérocycles azotés, acides carboxyliques, anhydrides, et catéchols.

Selon l'invention, N est 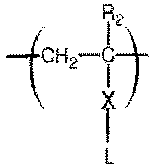 , où
R₂, identique ou différent, est H, un groupe alkyle en C₁-C₁₀, ou un groupe alkényle en C₂-C₁₀, et de préférence H ou CH₃,
X, identique ou différent, est un bras espaceur constitué d'un hétéroatome ou d'une chaine hydrocarbonée contenant au moins un hétéroatome, linéaire ou ramifiée, comprenant au moins un atome de carbone, et
L, identique ou différent, est un groupement éther halogéné selon la formule (I) 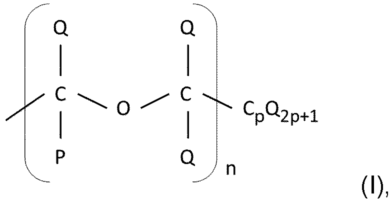 où
Q est un atome d'halogène,
P, identique ou différent, est un groupe alkyle en C₁-C₁₀ ou un groupe alkényle en C₂-C₁₀ comprenant au moins un atome d'halogène et étant linéaire ou ramifié,
p est choisi entre 1 et 4, de préférence entre 2 et 3, et
n est choisi entre 1 et 20, par exemple entre 1 et 16, de préférence entre 1 et 10.

Avantageusement, X, identique ou différent, est choisi parmi le groupe comprenant des groupes esters en C₁-C₂₀, des groupes amides, et des groupes dérivés du styrène. Optionnellement, X, identique ou différent, comprend au moins un hétéroatome.

Avantageusement, L est un groupement éther au moins partiellement fluoré, par exemple totalement fluoré. Le terme « totalement fluoré » tel qu'utilisé dans la présente divulgation indique un groupement éther dans lequel chaque atome d'hydrogène est remplacé par un atome de fluor.

Avantageusement, le copolymère est un copolymère statistique. Avantageusement, les unités M et les unités N sont réparties de manière aléatoire. Avantageusement, le copolymère est un copolymère statistique et les unités M et les unités N sont réparties de manière aléatoire.

Alternativement, et aussi avantageusement, le copolymère est un copolymère bloc. Avantageusement, le copolymère bloc comprend au moins un bloc d'unités M associées par liaisons covalentes par leurs chaines principales, et au moins un bloc d'unités N associées par liaisons covalentes par leurs chaines principales. Avantageusement, les blocs sont connectés entre eux par liaisons covalentes par leurs chaines principales en séquences linéaires.

Avantageusement, le ratio des unités N/unités M est entre 1 et 20, par exemple entre 2 et 18, ou entre 5 et 15.

Avantageusement, et optionnellement, le copolymère selon la présente divulgation comprend, en outre, des unités V. Avantageusement, les unités V sont associées aux unités M et N par liaisons covalentes par leurs chaines principales. Avantageusement, V est 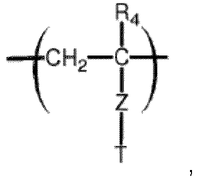 où
R₄, identique ou différent, est H, un groupe alkyle en C₁-C₁₀, un groupe alkényle en C₂-C₁₀, de préférence, H ou CH₃,
Z, identique ou différent, est un bras espaceur constitué d'un hétéroatome ou d'une chaine hydrocarbonée contenant au moins un hétéroatome, linéaire ou ramifiée, comprenant au moins un atome de carbone, et
T, identique ou différent, est un groupement traceur agencé pour déterminer la concentration en agent épilame dans un bain d'épilamage.

Avantageusement, T, identique ou différent, est un groupement absorbeur UV ou un fluorophore.

Avantageusement, la surface du substrat dont au moins une partie est recouverte de l'agent épilame est réalisée dans un matériau choisi parmi le groupe comprenant les métaux, les oxydes métalliques, les polymères, le saphir, le rubis, le silicium, les oxydes de silicium, les nitrures de silicium, les carbures de silicium, les diamond like carbon (DLC), et leurs alliages.

Un deuxième aspect de la présente invention concerne un procédé d'épilamage d'au moins une partie d'une surface d'un substrat selon les revendications annexées.

Le procédé d'épilamage selon la présente invention comprend la préparation d' un agent épilame comprenant au moins un copolymère tel que défini ci-dessus. Optionnellement, le procédé d'épilamage comprend en outre la préparation de la surface du substrat. Le procédé d'épilamage comprend en outre **la mise** en contact de la surface du substrat avec l'agent épilame.

Avantageusement, l'agent épilame est préparé (la préparation de l'agent épilame est réalisée) par copolymérisation de monomères aptes à former les unités M avec des monomères aptes à former les unités N. Avantageusement, les unités M et les unités N sont comme décrites ci-dessus. Avantageusement, les monomères sont choisis parmi le groupe comprenant les monomères acrylates, méthacrylates, acrylamides, méthacrylamides, vinyliques et styréniques.

Selon un mode d'exécution du procédé d'épilamage, l'agent épilame est préparé par préparation d'un bain d'épilamage contenant l'agent épilame. Ensuite, au moins une partie de la surface du substrat est mise en contact avec l'agent épilame dans le bain d'épilamage, par exemple par immersion du substrat dans le bain d'épilamage.

Cette préparation de l'agent épilame est en particulier appropriée quand l'agent épilame comprend au moins un copolymère comprenant en outre des unités V associées aux unités M et N par liaisons covalentes par leurs chaines principales. Avantageusement, les unités V sont comme décrites ci-dessus. La présence des unités V, et en particulier du groupement traceur, permet avantageusement et de façon optionnelle, de contrôler, avant la mise en contact, la concentration en agent épilame dans le bain d'épilamage. Optionnellement et après avoir contrôlé la concentration de l'agent épilame, la concentration en agent épilame dans le bain d'épilamage peut être réajustée.

Selon un autre mode d'exécution du procédé d'épilamage, la surface du substrat est mise en contact avec l'agent épilame par placement du substrat et de l'agent épilame dans une enceinte à pression ambiante, suivi par la fermeture hermétique de l'enceinte. Ensuite, **du** CO₂ à une pression comprise entre 25 bar et 74 bar, de préférence entre 45 bar et 70 bar, et à une température comprise entre 10 °C et 80 °C, de préférence entre 15 °C et 50 °C est introduit dans l'enceinte fermée hermétiquement. Puis, la pression dans l'enceinte est diminuée et le substrat épilamé est sorti de l'enceinte.

Un troisième aspect de la présente invention concerne l'utilisation d'un copolymère comprenant des unités M et des unités N, associées par liaisons covalentes par leurs chaines comme agent épilame d'au moins une partie d'une surface d'un substrat. Les unités M et les unités N sont comme décrite ci-dessus.

Une pièce d'horlogerie ou de bijouterie peut ainsi comprendre un élément comportant un substrat selon le premier aspect de la présente invention.

Un des avantages des agents épilames selon la présente invention est qu'ils ne sont pas sous pression règlementaire pour des raisons environnementales, bien qu'ils offrent un effet épilame performant. Un autre avantage est qu'ils sont résistant au lavage, en particulier au lavage horloger.

### Brève description des figures

Les buts, avantages et caractéristiques sont démontrés dans les figures suivantes, qui ne sont pas limitatives, et dans lesquelles :
- la figure 1 représente la structure d'un monomère perfluoroéther,
- la figure 2 représente la structure d'un monomère comprenant un groupement d'ancrage,
- la figure 3 représente la structure d'un copolymère épilame selon l'invention,
- la figure 4 représente les angles de contacts mesurés sur différents substrats dont la surface est recouverte d'un agent épilame selon l'invention,
- la figure 5 représente les angles de contacts mesurés sur différents substrats dont la surface est recouverte d'un agent épilame du type C6F13,
- la figure 6 représente les angles de contacts mesurés sur différents substrats dont la surface est recouverte d'un agent épilame concurrent.

### Description détaillée de l'invention

Conformément à la présente invention, un substrat comprend une surface dont au moins une partie est recouverte d'un agent épilame. Avantageusement, au moins la surface du substrat, et optionnellement le substrat entier, est réalisé dans un matériau choisi parmi le groupe comprenant les métaux, les oxydes métalliques, les polymères, le saphir, le rubis, le silicium, les oxydes de silicium, les nitrures de silicium, les carbures de silicium, les diamond like carbon (DLC), et leurs alliages.

Plus précisément, la surface du substrat peut comprendre ou être réalisée en acier, ou en métaux nobles tels que or, rhodium, palladium, platine, ou des combinaisons de deux ou plusieurs d'entre eux, ou en oxydes métalliques, dopés ou non d'aluminium, zirconium, titane, chrome, manganèse, magnésium, fer, nickel, cuivre, zinc, molybdène, argent, tungstène, ou des combinaisons de deux ou plusieurs d'entre eux, ou en polyoxyméthylène ou en acrylamide, ainsi que leurs alliages.

Avantageusement, dans la présente invention, le substrat est un substrat d'un élément d'une pièce d'horlogerie ou de bijouterie.

Avantageusement, le groupement X, identique ou différent, est choisi parmi le groupe comprenant des groupes esters en C₁-C₂₀, de préférence en C₂-C₁₀, plus préférentiellement en C₂-C₆, et encore plus préférentiellement en C₂-C₅, de préférence des groupes alkylesters, de préférence linéaires, des groupes amides, et des groupes dérivés du styrène.

Avantageusement, le groupement Y, identique ou différent, est choisi parmi le groupe comprenant des groupes esters en C₁-C₂₀, de préférence en C₂-C₁₀, plus préférentiellement en C₂-C₆, et encore plus préférentiellement en C₂-C₅, de préférence des groupes alkylesters, de préférence linéaires, des groupes amides, et des groupes dérivés du styrène.

Avantageusement, le copolymère comprend au moins deux groupes A différents. Les groupements fonctionnels d'intérêt A sont aptes à réagir avec la surface du substrat à épilamer, de manière à constituer des groupements d'ancrage de l'agent épilame à la surface du substrat. Avantageusement, des groupements A peuvent également être prévus en terminaison du copolymère.

Les groupements fonctionnels d'intérêt L sont responsables de l'effet épilame. Ils comprennent au moins un atome d'halogène Q. Avantageusement, l'atome d'halogène Q, identique ou différent, est un atome de fluor, un atome d'iode, un atome de brome ou un atome de chlore. De préférence, l'atome d'halogène est un atome de fluor. Si le groupement L comprend plusieurs atomes d'halogène, les atomes peuvent être identiques ou différents. Avantageusement, tous les atomes d'halogène Q du groupement L sont des atomes de fluor.

Les groupements fonctionnels d'intérêt L comprennent également un groupement P. Le groupement P, identique ou différent, est avantageusement un groupe alkyle en C₁-C₁₀, un groupe alkényle en C₂-C₁₀ ou un groupe alkynyle en C₂-C₁₀. Le groupement P comprend avantageusement au moins un atome d'halogène. Avantageusement, l'atome d'halogène, identique ou différent, est un atome de fluor, un atome d'iode, un atome de brome ou un atome de chlore. De préférence, l'atome d'halogène est un atome de fluor. Le groupement P peut être linéaire ou ramifié.

Avantageusement, le groupement P est un groupe perfluoroalkyle en C₁-C₁₀, de préférence un groupe perfluoroalkyle en C₁-C₆, par exemple un groupe perfluoroalkyle en C₁-C₄, tel que CF₃, C₂F₅, C₃F₇ ou C₄F₉.

Avantageusement et alternativement, le groupement P est un groupe perfluoroalkényle en C₂-C₁₀, de préférence un groupe perfluoroalkényle en C₂-C₆, par exemple un groupe perfluoroalkényle en C₂-C₄, tel que C₂F₃, C₃F₅ et C₄F₇.

Avantageusement et alternativement, le groupement P est un groupe perfluoroalkynyle en C₂-C₁₀, de préférence un groupe perfluoroalkynyle en C₂-C₆, par exemple un groupe perfluoroalkynyle en C₂-C₄, tel que C₂F, C₃F₃, et C₄F₅.

Avantageusement, dans le groupement fonctionnel d'intérêt L, p est choisi entre 1 et 4, de préférence entre 2 et 3.

Avantageusement, dans le groupement fonctionnel d'intérêt L, n est choisi entre 1 et 20, par exemple entre 1 et 16, de préférence entre 1 et 10, par exemple entre 2 et 8.

Un groupement fonctionnel d'intérêt L de préférence dans la présente invention est représenté par la structure (CF(CF₃)OCF₂)ₙCF₂CF₃, c'est-à-dire que Q est un atome de fluor (F), P est CF₃, et p est 2. Plus particulièrement, une structure du groupement L préférée est (CF(CF₃)OCF₂)₅CF₂CF₃, c'est-à-dire que Q est un atome de fluor (F), P est CF₃, p est 2, et n est 5.

Un des copolymères utilisés de préférence dans la présente invention représente la structure suivante (II)

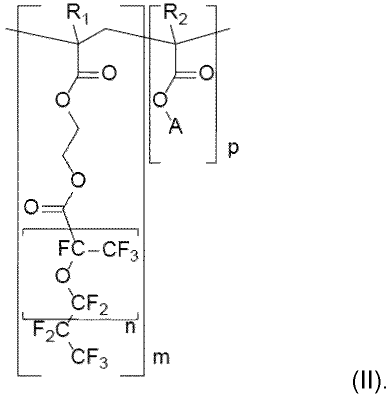

En autres mots, dans ce copolymère X est C(O)O(CH₂)₂OC(O) ; Y est C(O)O ; P est fluor (F) ; Q est CF₃ ; et p est 2, ce qui indique que L est (CF(CF₃)OCF₂)ₙCF₂CF₃. De préférence, dans le copolymère représenté par la structure (II), R₁ et R₂, identiques ou différents, sont H ou CH₃.

Un exemple particulier de ce copolymère présenté par la structure (II), sans être limitatif, est un copolymère dans lequel n est 5, R₁ est H, R₂ est CH₃, A est CH₂(CHCH₂O), et le ratio m/p est 9.

Optionnellement, le copolymère peut en outre comprendre au moins une unité U, où U est 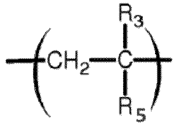 , où
R₃, identique ou différent, est H, un groupe alkyle en C₁-C₁₀, ou un groupe alkényle en C₂-C₁₀, et de préférence H ou CH₃, et
R₅, identique ou différent, est H, CH₃, une chaine hydrocarbonée pouvant contenir au moins un hétéroatome, linéaire ou ramifiée, saturée ou insaturée, comprenant au moins 2 atomes de carbone.

Avantageusement, quand le copolymère comprend au moins une unité U, l'unité U et les unités M et les unités N sont associés par liaisons covalentes par leurs chaines principales.

Avantageusement, les groupements fonctionnels d'intérêt R₅ permettent de modifier les propriétés de l'agent épilame et/ou d'apporter d'autres fonctions. Par exemple, R₅ peut être une chaine alkyle utilisée pour modifier l'angle de contact obtenu, ou peut être une chaine capable de constituer des points de réticulation lors d'une étape de réticulation complémentaire.

Avantageusement, le ratio des unités N/unités M est entre 1 et 20, de préférence entre 2 et 18, par exemple entre 5 et 15, ou entre 7 et 12, par exemple 8, 9, 10, ou 11.

Avantageusement, le copolymère comprend entre 0.1 % et 50 %, de préférence entre 5 % et 30 %, et plus préférentiellement entre 5 % et 20 % d'unités M, le pourcentage étant exprimé par rapport au nombre total d'unités dans le copolymère. Avantageusement, le copolymère comprend entre 1 % et 99.9 %, de préférence entre 50 % et 99.9 %, et plus préférentiellement entre 80 % et 95 % d'unités N, le pourcentage étant exprimé par rapport au nombre total d'unités dans le copolymère. Avantageusement, le copolymère comprend entre 0 % et 50 %, de préférence entre 0 % et 30 %, et plus préférentiellement entre 0 % et 10 % d'unités U, le pourcentage étant exprimé par rapport au nombre total d'unités dans le copolymère.

Optionnellement, le copolymère peut en outre comprendre au moins une unité V, où V est comme décrite ci-dessus. Avantageusement, quand le copolymère comprend au moins une unité V, l'unité V et les unités M et les unités N sont associés par liaisons covalentes par leurs chaines principales.

Avantageusement, le groupement Z, identique ou différent, est choisi parmi le groupe comprenant des groupes esters en C₁-C₂₀, de préférence en C₂-C₁₀, plus préférentiellement en C₂-C₆, et encore plus préférentiellement en C₂-C₅, de préférence des groupes alkylesters, de préférence linéaires, des groupes amides, et des groupes dérivés du styrène.

Avantageusement, le groupement T permet par exemple de déterminer la concentration en copolymère par spectroscopie.

Avantageusement, T, identique ou différent, est un groupement absorbeur UV dérivé d'un composé choisi parmi le groupe comprenant les benzotriazoles, les triazines, les phénones (notamment benzophénone, acétophénone, hydroxyalkylphénone, hydroxyarylphénone, amino alkylphénone, et anthraquinone), et les oxydes d'acyl-phosphine.

Avantageusement, T, identique ou différent, est un groupement fluorophore dérivé d'un composé choisi parmi le groupe comprenant la fluoroscéine, un naphtyle, l'anthracène, la coumarine, la rhodamine, et un fluorobenzoate.

Avantageusement, le copolymère comprend entre 5 et 500 unités, de préférence entre 10 et 350 unités.

Le copolymère peut être un copolymère statistique ou un copolymère bloc.

Avantageusement, quand le copolymère est un copolymère statistique, les unités M, N, les unités optionnelles V et les unités optionnelles U sont réparties de manière aléatoire. Autrement dit, les unités sont reliées entre elles statistiquement par leur chaine principale.

Avantageusement, quand le copolymère est un copolymère bloc, le copolymère comprend au moins un bloc d'unités M associées par liaisons covalentes par leurs chaines principales, et au moins un bloc d'unités N associées par liaisons covalentes par leurs chaines principales. De préférence, le copolymère bloc comprend un seul bloc d'unités M et/ou un seul bloc d'unités N.

Optionnellement, le copolymère bloc comprend en outre au moins un bloc d'unités V associées par liaisons covalentes par leurs chaines principales. De préférence et optionnellement, le copolymère bloc comprend un seul bloc d'unités V.

Optionnellement, au moins l'un du bloc d'unités M, du bloc d'unités N et du bloc d'unités V optionnel comprend optionnellement au moins une unité U, associée par liaisons covalentes par leurs chaines principales. Avantageusement, les blocs sont connectés entre eux par liaisons covalentes par leurs chaines principales en séquences linéaires. Si le copolymère bloc comprend en outre au moins une unité U, au moins l'un du bloc d'unités M, du bloc d'unités N et du bloc optionnel d'unités V comprend au moins une unité U, et le nombre d'unités U dans le bloc d'unités M peut varier du nombre d'unités U dans le bloc d'unités N et du nombre d'unités U dans le bloc d'unités V si ce dernier est compris dans le copolymère bloc.

De préférence, les unités U sont intégrées et réparties au sein du bloc composé des unités N, par exemple par copolymérisation statistique d'unités U avec les unités N pour former un seul bloc constitué majoritairement d'unités N et assimilé à un bloc d'unités N.

La présente invention concerne également un procédé d'épilamage d'au moins une partie d'une surface d'un substrat comprenant la préparation d'un agent épilame, optionnellement la préparation de la surface du substrat, et la mise en contact de la surface du substrat avec l'agent épilame.

Avantageusement, la préparation de l'agent épilame comprend la copolymérisation de monomères aptes à former les unités M avec des monomères aptes à former les unités N, optionnellement des monomères aptes à former au moins une unité V, et optionnellement des monomères aptes à former au moins une unité U.

Avantageusement, les monomères sont choisis parmi le groupe comprenant les monomères acrylates, méthacrylates, acrylamides, méthacrylamides, vinyliques, diéniques, styréniques et oléfiniques.

Les monomères particulièrement préférés pour former les unités V comprenant un groupement traceur T sont choisis parmi le groupe comprenant le 2-H-benzotriazole-2-yl-hydroxyphenyl ethyl methacrylate, le 2-(2H-benzotriazol-2-yl)-4-methyl-6-(2-propenyl)phenol, le 2-(4-benzoyl-3-hydroxyphenoxy)ethyl acrylate, la 4-allyloxy-2-hydroxybenzophenone, le 2-naphthyl (meth)acrylate, le fluorescein O-(meth)acrylate, le 9-anthracenylmethyl (meth)acrylate, l'éthidium bromide-N,N'-bisacrylamide, le N-(1-naphthyl)-N-phenylmethacrylamide, et le 7-[4-(trifluoromethyl)coumarin] methacrylamide. De tels monomères sont disponibles commercialement et sont polymérisables.

Encore plus préférentiellement, les monomères pour former les unités V comprenant un groupement traceur T sont choisis parmi le groupe comprenant le 2-H-benzotriazole-2-yl-hydroxyphenyl ethyl methacrylate, le 2-(2H-benzotriazol-2-yl)-4-methyl-6-(2-propenyl)phenol, le 2-(4-benzoyl-3-hydroxyphenoxy)ethyl acrylate, et la 4-allyloxy-2-hydroxybenzophenone. Ces monomères comportent des groupements traceurs pouvant être suivis par spectroscopie UV-visible, beaucoup plus facile à mettre en place dans un environnement industriel que la spectroscopie de fluorescence.

Les techniques de polymérisation comprennent les techniques connues de l'homme du métier. Optionnellement, la copolymérisation est réalisée en présence d'un amorceur, tel que, sans être limitatif, l'azobisisobutyronitrile (AIBN). Optionnellement, la copolymérisation est réalisée à une température élevée.

Les copolymères utilisés dans la présente invention peuvent être obtenus sous la forme de poudre ou de liquide visqueux.

Un mode de polymérisation particulièrement approprié afin d'obtenir un copolymère statistique est la copolymérisation radicalaire libre, en solution ou en émulsion.

Un mode de polymérisation particulièrement approprié afin d'obtenir un copolymère bloc est la copolymérisation radicalaire contrôlée successive :
- de monomères aptes à former au moins un bloc d'unités M et optionnellement avec des monomères aptes à former au moins une unité U,
- de monomères aptes à former au moins un bloc d'unités N et optionnellement avec des monomères aptes à former au moins une unité U, U identique ou différente, et
- optionnellement de monomères aptes à former au moins un bloc d'unités V et optionnellement avec des monomères aptes à former au moins une unité U, U identique ou différente.

Selon un premier mode de copolymérisation, le copolymère peut être obtenu en une seule étape par copolymérisation, de préférence radicalaire, de monomères portant des chaines latérales Y-A avec des monomères portant des chaines latérales X-L, optionnellement des monomères portant des chaines latérales Z-T, et optionnellement des monomères portant des chaines latérales Rs.

Selon un autre mode de copolymérisation, le copolymère peut être obtenu par copolymérisation, de préférence radicalaire, de monomères portant les chaines latérales Y adéquates avec des monomères portant les chaines latérales X adéquates, optionnellement des monomères portant les chaines latérales Z adéquates, et optionnellement des monomères portant des chaines latérales destinées à porter R₅, puis les chaines latérales sont modifiées, par exemple par « click chemistry », pour y introduire les groupements fonctionnels d'intérêt A, L, T (optionnellement), et les groupes R₅ (optionnellement).

Avantageusement, quand la copolymérisation est une copolymérisation radicalaire, la copolymérisation radicalaire est du type « libre » afin d'obtenir un copolymère statistique. Avantageusement, la copolymérisation radiculaire est du type « contrôlé » afin d'obtenir un copolymère bloc.

La préparation optionnelle de la surface du substrat peut inclure un nettoyage et/ou lavage de la surface à épilamer. Un tel nettoyage ou lavage peut être réalisé selon des procédés connus de l'homme du métier. Par exemple, et en particulier quand le substrat est un composant horloger, le nettoyage peut inclure un nettoyage selon les procédés horlogers standards.

Alternativement, la préparation de la surface du substrat peut inclure un traitement par CO₂ à une température comprise entre 10 °C et 80 °C et une pression comprise entre 25 bar et 250 bar, par exemple pendant une durée comprise entre 1 min et 60 min. Un tel traitement permet avantageusement l'élimination de poussières particules et le dégraissage de la surface.

Avantageusement, le ou les copolymères sont mis en solution dans un solvant fluoré, tel que les hydrocarbures perfluorés ou fluorés, les perfluoropolyethers, les hydrofluorooléfines, les hydrofluoroethers, à des concentrations comprises de préférence entre 50 mg/L et 1 g/L, afin d'obtenir une solution d'agent épilame.

Selon un premier mode d'exécution du procédé d'épilamage, une telle solution d'agent épilame est ensuite utilisée dans un bain d'épilamage. Le même bain d'épilamage peut être utilisé plusieurs fois. Avantageusement, quand le même bain d'épilamage est utilisé plusieurs fois, des moyens de contrôle et optionnellement des moyens de maintien de la concentration de l'agent épilame sont présents afin de contrôler et optionnellement de maintenir cette concentration au cours du temps, et de préférence avant de mettre en contact la surface du substrat avec l'agent épilame dans le bain d'épilamage.

De tels moyens de contrôle de la concentration peuvent inclure la présence d'au moins une unité V tel que décrite ci-dessus dans le copolymère. Autrement dit, la présence d'au moins une unité V comprenant un groupement T tel que décrit ci-dessus, permet de contrôler la concentration en agent épilame dans le bain d'épilamage.

Avantageusement, lorsque le groupement T est un groupement absorbeur UV ou un fluorophore, la détermination de la concentration en agent épilame est réalisée par spectroscopie (mesure d'absorbance par exemple). Une étape intermédiaire, préalable à l'étape de contrôle de la concentration de l'agent épilame dans le bain d'épilamage, prévoit l'élaboration d'une courbe de calibration du copolymère. Pour cela, le copolymère est dissous à différentes concentrations dans un solvant, et pour chaque solution l'absorbance est mesurée par spectroscopie en fonction de la longueur d'onde. La longueur d'onde pour laquelle l'absorbance est maximale est repérée puis la courbe de calibration A = F(concentration) est tracée à la longueur d'onde pour laquelle l'absorbance est maximale. Le coefficient d'extinction molaire du polymère peut ensuite en être déduit (loi de Beer Lambert A=εcl).

Pour contrôler la concentration en agent épilame dans le bain d'épilamage, il suffit alors de mesurer l'absorbance de la solution du bain par spectroscopie, puis en utilisant la courbe de calibration préalablement établie d'en déduire la concentration en agent épilame dans le bain. En fonction du résultat, un supplément de l'agent épilame peut ensuite être ajouté dans le bain afin de réajuster précisément la concentration.

Le procédé d'épilamage selon l'invention peut comprendre en outre, après la mise en contact de la surface du substrat avec l'agent épilame, une étape de séchage de la surface épilamée.

Selon un deuxième mode d'exécution du procédé d'épilamage, la solution d'agent épilame telle que décrite ci-dessus est utilisée (y inclus placée) dans une enceinte. Alternativement, l'agent épilame peut être placé dans l'enceinte sous une forme pure.

Avantageusement, le substrat et l'agent épilame sont placés dans une enceinte à pression ambiante, soit une pression comprise entre 0.6 bar et 1.1 bar, suivi par la fermeture hermétique de l'enceinte.

Ensuite, du CO₂ est introduit dans l'enceinte fermée hermétiquement. Avantageusement, le CO₂ est introduit pendant une durée comprise entre 1 min et 30 min, de préférence entre 1 min et 20 min, et plus préférentiellement entre 3 min et 15 min.

Avantageusement, le CO₂ est à une pression comprise entre 25 bar et 74 bar, de préférence entre 45 bar et 70 bar, et plus préférentiellement entre 50 bar et 60 bar.

Avantageusement, le CO₂ est à une température comprise entre 10 °C et 80 °C, de préférence entre 10 °C et 60 °C, et plus préférentiellement entre 15 °C et 50 °C.

Puis, l'introduction de CO₂ est arrêtée et la pression dans l'enceinte est diminuée. Avantageusement, la pression est diminuée à la pression ambiante, soit une pression comprise entre 0.6 bar et 1.1 bar.

Puis, le substrat épilamé est sorti de l'enceinte.

Optionnellement, après la diminution de la pression dans l'enceinte et la sortie du substrat épilamé de l'enceinte, le substrat épilamé peut être traité de façon thermique. Par exemple, le substrat épilamé peut être chauffé dans l'enceinte à une température comprise entre 250 °C et 90 °C, de préférence entre 30 °C et 80 °C pendant une durée comprise entre 1 min et 45 min, de préférence entre 2 min et 30 min. Un tel traitement thermique permet d'améliorer l'ancrage de l'agent épilame à la surface du substrat traité.

Le procédé d'épilamage selon l'invention peut comprendre en outre, après la mise en contact de la surface du substrat avec l'agent épilame, une étape de réticulation complémentaire. Une réticulation complémentaire est avantageusement rendue possible par la présence des groupes fonctionnels d'intérêt appropriés prévus sur les chaines latérales R₅ des unités U.

### Exemples

### Exemple 1

Un agent épilame a été produite par copolymérisation statistique, résultant en un copolymère du type perfluoroéther.

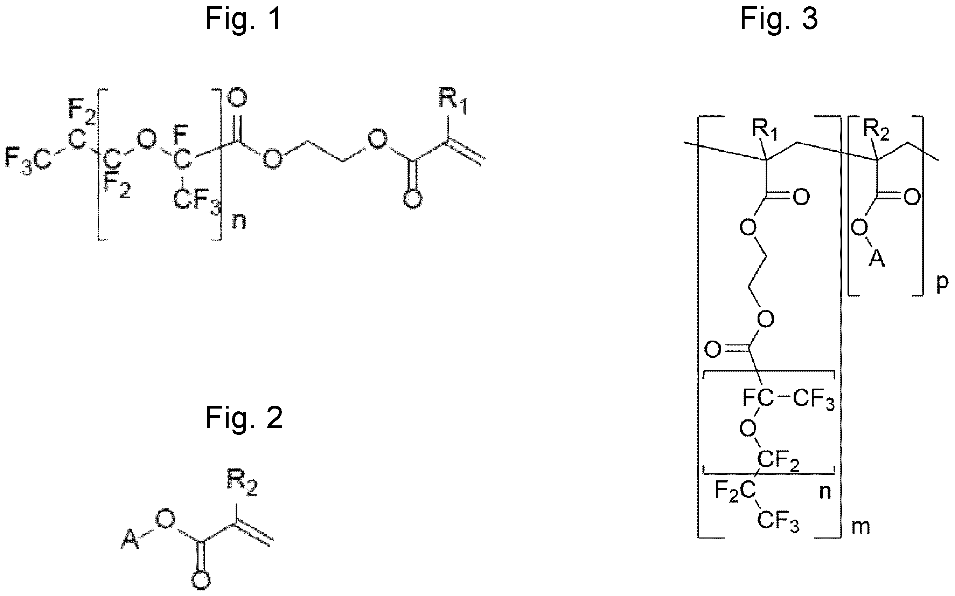

Dans une première étape, un monomère acrylate perfluoroéther (« monomère perfluoroéther ») a été synthétisé. Du fluorure de perfluoro-2,5,8,11,14-pentaméthyl-3,6,9,12,15-pentaoxaoctadécanoyle (CAS 13252-15-8) a été mis en réaction avec l'acrylate de 2-hydroxyéthyle (CAS 818-61-1) en présence de fluorure de sodium et à une température ambiante. Figure 1 représente le monomère obtenu, dans lequel n est 5 et R₁ est H (hydrogène).

Le monomère acrylate perfluoroéther a ensuite été copolymérisé par copolymérisation statistique avec le méthacrylate de glycidyle, représenté dans la Figure 2, A étant CH₂(CHCH₂O) et R₂ étant CH₃ (CAS 106-91-2), en présence de l'amorceur AIBN. Figure 3 représente le copolymère épilame obtenu, dans laquelle n est 5, R₁ est H, R₂ est CH₃, A est CH₂(CHCH₂O) et dans un ratio m/p de 9.

### Exemple 2

Trois agents épilame différents ont été déposés sur la surface d'un substrat en acier, ayant subi au préalable un traitement de préparation de surface, en utilisant un bain d'épilamage. Le premier agent épilame est le copolymère synthétisé dans l'exemple 1. Le deuxième agent épilame contient des groupements du type perfluoroakyle en C₆, c'est-à-dire des groupements C₆F₁₃, comme groupements épilames. Le troisième agent épilame est un agent épilame concurrent comprenant du méthyl nonafluoroisobutyl éther (CAS 163702-08-7), methyl nonafluorobutyl éther (CAS 163702-07-6) et un polymère fluoroaliphatique.

Afin d'évaluer les propriétés des agents épilame, de différents tests ont été fait.

Comme premier test, l'énergie de surface a été déterminée. La procédure, connue de l'homme du métier, consiste à mesurer (à l'aide d'un appareil de mesure d'angles de contact OCA 15 de Dataphysics) des angles de contact de gouttes de 3 liquides. Ceux-ci sont l'eau, le diiodométhane et l'éthylène glycol, qui possèdent chacun des tensions superficielles bien distinctes. À partir des angles obtenus, l'énergie de surface est calculée en appliquant la méthode Owens, Wendt, Rabel and Kaelble (OWRK).

Les résultats sont présentés dans le tableau 1. La surface du substrat en acier sans agent épilame, ayant subi une procédure de préparation de surface, avait une énergie de surface de 34.95 mN/m. Tous les agents épilame montrent une réduction de l'énergie de surface, et l'agent épilame de l'invention montre la valeur la plus basse. Plus basse est l'énergie de surface, meilleure est l'oléophobicité.

**Table 1 : l'énergie de surface de différents agents épilames**

| **Agent épilame** | **Energie de surface (mN/m)** |
|---|---|
| Epilame de l'invention | 18.44 |
| Epilame du type C₆F₁₃ | 19.10 |
| Epilame concurrent | 24.05 |

### Exemple 3

Les trois agents épilames de l'exemple 2 ont ensuite été utilisés (appliqués) à plusieurs substrats ayant une composition différente.

Afin d'évaluer la performance des agents épilames, l'angle de contact a été mesuré avec l'huile de test n° 3 et avec l'huile 9010, de Moebius^{®}. Des gouttes des deux huiles ont été déposées et les angles de contact ont été mesurés à l'aide d'un appareil optique (Dataphysics OCA 15). Afin d'évaluer la résistance aux lavages horloger, les substrats ont été lavés trois fois selon un lavage horloger (solution d'hydrocarbures aminée), suivi par la mesure des angles de contact.

Les valeurs cibles visées pour chaque mesure sont les suivantes :
- Huile de test n° 3 - initial (avant lavages) : 60 °
- Huile de test n° 3 - après 3 lavages : 35 °
- Huile 9010 - initial : 70 °
- Huile 9010 - après 3 lavages : 45 °

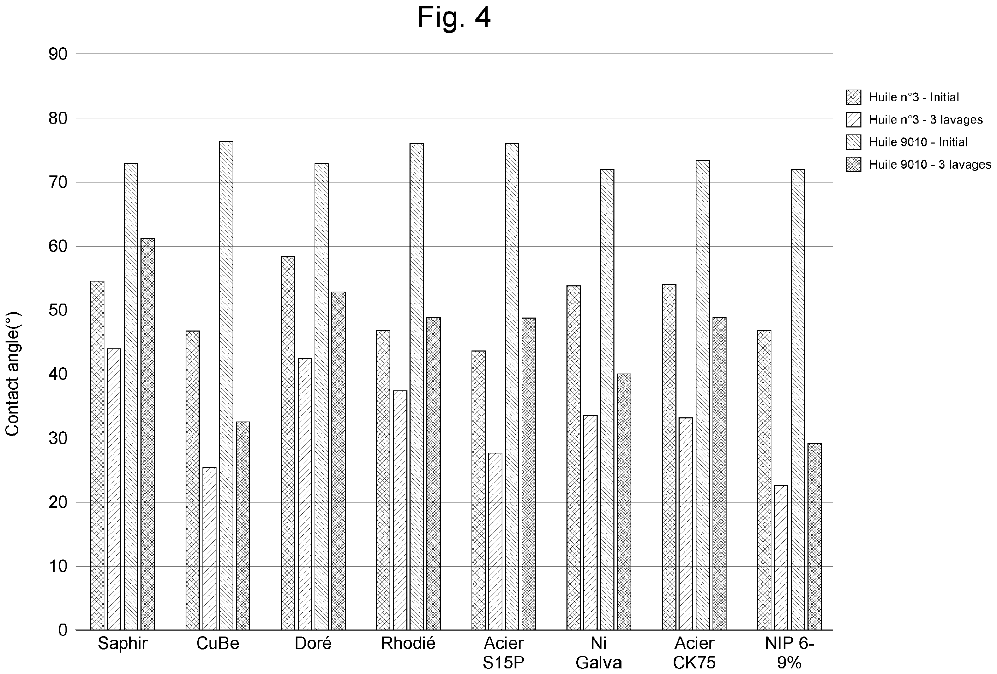

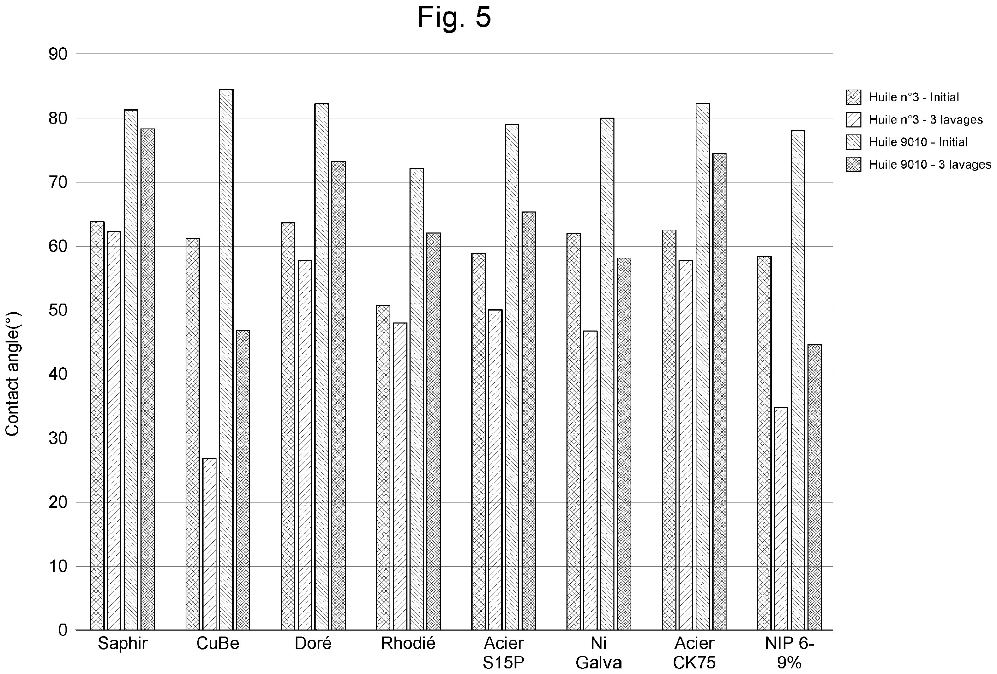

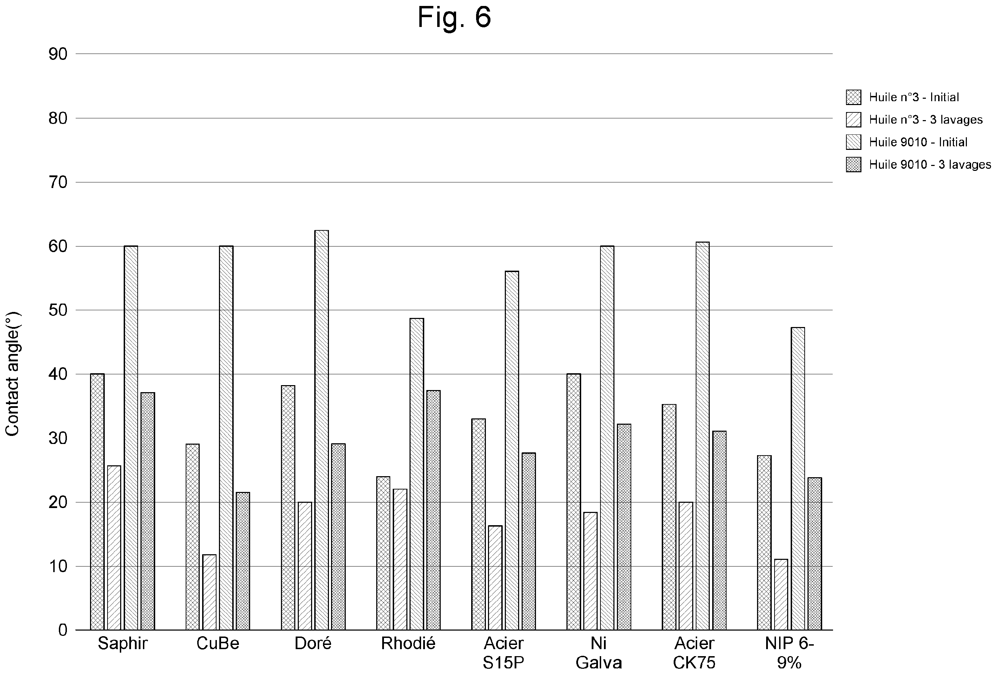

La Figure 4 représente les résultats sur les substrats différents pour le copolymère inventif. La Figure 5 représente les résultats pour l'agent épilame du type C₆F₁₃, et la Figure 6 représente les résultats pour l'agent épilame concurrent.

Il est clair de la Figure 6 que pour aucun des substrats les valeurs cibles visées pour chaque huile, avant et après 3 lavages, sont atteintes. Par contre, les valeurs cibles visées pour l'huile 9010 sont atteintes avec le copolymère selon l'invention et l'agent épilame du type C₆F₁₃. Les valeurs cibles visées pour l'huile n° 3 sont atteintes sur certains substrats avec ces deux agents épilames (Figures 4 et 5).

## Revendications

1. Substrat comprenant une surface dont au moins une partie est recouverte d'un agent épilame, **caractérisé en ce que** ledit agent épilame comprend au moins un composé sous la forme d'un copolymère comprenant des unités M et des unités N, associées par liaisons covalentes par leurs chaines principales, où
M est 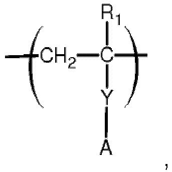 N est 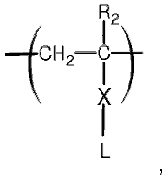 où
R₁ et R₂, identiques ou différents, sont H, un groupe alkyle en C₁-C₁₀, un groupe alkényle en C₂-C₁₀, et de préférence H ou CH₃,
X et Y, identiques ou différents, sont des bras espaceurs constitués d'un hétéroatome ou d'une chaine hydrocarbonée contenant au moins un hétéroatome, linéaire ou ramifiée, comprenant au moins un atome de carbone,
A, identique ou différent, constitue un groupement d'ancrage au substrat,
L, identique ou différent, est un groupement éther halogéné selon la formule (I) 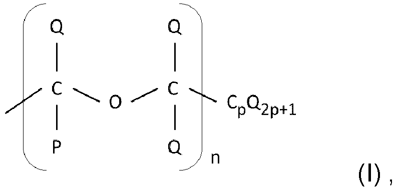 où
Q est un atome d'halogène,
P, identique ou différent, est un groupe alkyle en C₁-C₁₀ ou un groupe alkényle en C₂-C₁₀ comprenant au moins un atome d'halogène et étant linéaire ou ramifié,
p est choisi entre 1 et 4, de préférence entre 2 et 3, et
n est choisi entre 1 et 20, de préférence entre 1 et 10.

2. Substrat selon la revendication 1, **caractérisé en ce que** le copolymère est un copolymère statistique et que les unités M et les unités N sont réparties de manière aléatoire.

3. Substrat selon la revendication 1, **caractérisé en ce que** le copolymère est un copolymère bloc comprenant au moins un bloc d'unités M associées par liaisons covalentes par leurs chaines principales, et au moins un bloc d'unités N associées par liaisons covalentes par leurs chaines principales, lesdits blocs étant connectés entre eux par liaisons covalentes par leurs chaines principales en séquences linéaires.

4. Substrat selon l'une quelconque des revendications précédentes, **caractérisé en ce que** L est un groupement éther au moins partiellement fluoré, de préférence totalement fluoré.

5. Substrat selon l'une quelconque des revendications précédentes, **caractérisé en ce que** A est choisi parmi le groupe comprenant le glycidyle, les thiols, thioéthers, thioesters, sulfures, thioamides, silanols, alkoxysilanes, halogénures de silane, hydroxyles, phosphates, acides phosphoniques protégés ou non, phosphonates protégés ou non, amines, ammoniums, hétérocycles azotés, acides carboxyliques, anhydrides, et catéchols.

6. Substrat selon l'une quelconque des revendications précédentes, **caractérisé en ce que** X et Y, identiques ou différents, sont choisis parmi le groupe comprenant des groupes esters en C₁-C₂₀, des groupes amides, et des groupes dérivés du styrène, dans lequel X et Y, identiques ou différents, comprennent optionnellement au moins un hétéroatome.

7. Substrat selon l'une quelconque des revendications précédentes, **caractérisé en ce que** le ratio des unités N/unités M est entre 1 et 20.

8. Substrat selon l'une quelconque des revendications précédentes, **caractérisé en ce que** le copolymère, en outre, comprend des unités V associées aux unités M et N par liaisons covalentes par leurs chaines principales, où V est 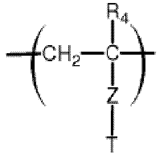 , où
R₄, identique ou différent, est H, un groupe alkyle en C₁-C₁₀, un groupe alkényle en C₂-C₁₀, et de préférence H ou CH₃,
Z, identique ou différent, est un bras espaceur constitué d'un hétéroatome ou d'une chaine hydrocarbonée contenant au moins un hétéroatome, linéaire ou ramifiée, comprenant au moins un atome de carbone, et
T, identique ou différent, est un groupement traceur agencé pour déterminer la concentration en agent épilame dans un bain d'épilamage.

9. Substrat selon la revendication 8, **caractérisé en ce que** T, identique ou différent, est un groupement absorbeur UV ou un fluorophore.

10. Substrat selon l'une quelconque des revendications précédentes, **caractérisé en ce que** sa surface dont au moins une partie est recouverte de l'agent épilame est réalisée dans un matériau choisi parmi le groupe comprenant les métaux, les oxydes métalliques, les polymères, le saphir, le rubis, le silicium, les oxydes de silicium, les nitrures de silicium, les carbures de silicium, les diamond like carbon (DLC), et leurs alliages.

11. Procédé d'épilamage d'au moins une partie d'une surface d'un substrat comprenant les étapes de :
- préparation d'un agent épilame comprenant au moins un copolymère tel que défini aux revendications précédentes,
- optionnellement, préparation de la surface du substrat,
- mise en contact de la surface du substrat avec l'agent épilame.

12. Procédé d'épilamage selon la revendication 11, **caractérisé en ce que** la préparation de l'agent épilame est réalisée par copolymérisation de monomères aptes à former les unités M avec des monomères aptes à former les unités **N,** de préférence dans lequel les monomères choisis parmi le groupe comprenant les monomères acrylates, méthacrylates, acrylamides, méthacrylamides, vinyliques et styréniques.

13. Procédé d'épilamage selon l'une quelconque des revendications 11 à 12, **caractérisé en ce que** l'agent épilame comprend au moins un copolymère tel que défini aux revendications 8 à 9, la préparation de l'agent épilame est réalisée par préparation d'un bain d'épilamage contenant l'agent épilame, la surface du substrat est mise en contact avec l'agent épilame dans le bain d'épilamage, et le procédé comprend optionnellement, avant la mise en contact, une étape de contrôle de la concentration en agent épilame dans le bain d'épilamage au moyen du groupement traceur et, optionnellement, une étape de réajustement de la concentration en agent épilame dans le bain d'épilamage.

14. Procédé d'épilamage selon l'une quelconque des revendications 11 à 12, **caractérisé en ce que** l'étape de mise en contact de la surface du substrat avec l'agent épilame comprend les étapes de :
- placement du substrat et de l'agent épilame dans une enceinte à pression ambiante,
- fermeture hermétique de l'enceinte,
- introduction dans l'enceinte fermée hermétiquement de CO₂ à une pression comprise entre 25 bar et 74 bar, de préférence entre 45 bar et 70 bar, et à une température comprise entre 10 °C et 80 °C, de préférence entre 15 °C et 50 °C,
- diminution de la pression dans l'enceinte, et
- sortie du substrat épilamé de l'enceinte.

15. Utilisation d'un copolymère comprenant des unités M et des unités N, associées par liaisons covalentes par leurs chaines principales, où
M est 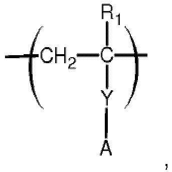 N est 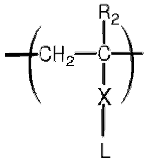 , où
R₁ et R₂, identiques ou différents, sont H, un groupe alkyle en C₁-C₁₀, un groupe alkényle en C₂-C₁₀, et de préférence H ou CH₃,
X et Y, identiques ou différents, sont des bras espaceurs constitués d'un hétéroatome ou d'une chaine hydrocarbonée contenant au moins un hétéroatome, linéaire ou ramifiée, comprenant au moins un atome de carbone,
A, identique ou différent, constitue un groupement d'ancrage au substrat,
L, identique ou différent, est un groupement éther halogéné selon la formule (I) 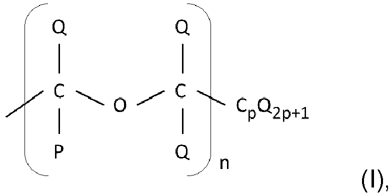 où
Q est un atome d'halogène,
P, identique ou différent, est un groupe alkyle en C₁-C₁₀ ou un groupe alkényle en C₂-C₁₀ comprenant au moins un atome d'halogène et étant linéaire ou ramifié,
p est choisi entre 1 et 10, et n est choisi entre 1 et 20,
comme agent épilame d'au moins une partie d'une surface d'un substrat.

## Patentansprüche

1. Substrat mit einer Oberfläche, von der mindestens ein Teil mit einem Epilammittel überzogen ist, **dadurch gekennzeichnet, dass** dieses Epilammittel mindestens eine Verbindung in Form eines Copolymers umfasst, das M-Einheiten und N-Einheiten beinhaltet, die durch kovalente Bindungen über ihre Hauptketten miteinander verbunden sind, wobei
M 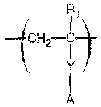 ist, N 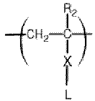 ist, wobei
R₁ und R₂, gleich oder verschieden, eine C₁-C₁₀-Alkylgruppe, eine C₂-C₁₀-Alkylgruppe sind, vorzugsweise H oder CH₃,
X und X und Y, gleich oder verschieden, Grenzarme aus einem Heteroatom oder einer Kohlenwasserstoffkette sind, die mindestens ein lineares oder verzweigtes Heteroatom enthalten, umfassend mindestens ein Kohlenstoffatom,
A, gleich oder verschieden, eine Verankerungsgruppe mit dem Substrat darstellt, L, gleich oder verschieden, eine halogenierte Ethergruppe ist gemäß der Formel (I) 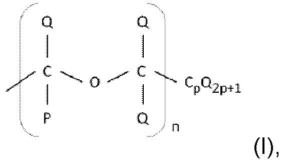 wobei
Q ein Halogenatom ist,
P, gleich oder verschieden, eine C₁-C₁₀-Alkylgruppe oder eine C₂-C₁₀-Alkylgruppe mit mindestens einem Halogenatom ist und linear oder verzweigt ist,
p ausgewählt zwischen 1 und 4 ist, vorzugsweise zwischen 2 und 3, und
n ausgewählt zwischen 1 und 20 ist, vorzugsweise zwischen 1 und 10.

2. Substrat nach Anspruch 1, **dadurch gekennzeichnet, dass** das Copolymer ein statistisches Copolymer ist und dass die M- und N-Einheiten nach dem Zufallsprinzip aufgeteilt sind.

3. Substrat nach Anspruch 1, **dadurch gekennzeichnet, dass** das Copolymer ein BlockCopolymer ist, umfassend mindestens einen Block M-Einheiten, die durch ihre Hauptketten kovalent verbunden sind, und mindestens einen Block N-Einheiten, die durch ihre Hauptketten kovalent verbunden sind, wobei diese Blöcke über ihre Hauptketten in linearer Sequenz kovalent miteinander verbunden sind.

4. Substrat nach irgendeinem der vorstehenden Ansprüche, **dadurch gekennzeichnet, dass** L eine zumindest teilweise fluoreszierende, vorzugsweise vollständig fluoreszierende Verbindung ist.

5. Substrat nach irgendeiner der vorhergehenden Ansprüche, **dadurch gekennzeichnet, dass** A ausgewählt ist aus der Gruppe, bestehend aus Glycidyl, Thiolen, Thioethern, Thioestern, Sulfiden, Thioamiden, Silanolen, Alkoxysilanen, Silanhalogeniden, Hydroxylgruppen, Phosphaten, geschützten oder ungeschützten phosphonischen Säuren, geschützten oder ungeschützten Phosphonaten, Aminen, Ammoniumverbindungen, stickstoffhaltigen Heterocyclen, Carbonsäuren, Anhydriden und Katecholen.

6. Substrat nach irgendeinem der zuvor genannten Ansprüche, **dadurch gekennzeichnet, dass** X und Y, gleich oder verschieden, ausgewählt sind aus der Gruppe bestehend aus Estergruppen in C₁-C₂₀, Amidgruppen und Styrolderivaten, wobei X und Y, gleich oder verschieden, optional mindestens ein Heteroatom umfassen.

7. Substrat nach irgendeinem der zuvor genannten Ansprüche, **dadurch gekennzeichnet, dass** das Verhältnis der N-Einheiten/M-Einheiten zwischen 1 und 20 liegt.

8. Substrat nach irgendeinem der zuvor genannten Ansprüche, **dadurch gekennzeichnet, dass** das Copolymer zudem V-Einheiten umfasst, die durch ihre Hauptketten M und N kovalent verbunden sind, wobei V 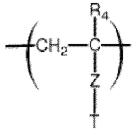 ist, wobei
R₄ gleich oder verschieden, H, eine C₁₋C₁₀-Alkylgruppe, eine C₂-C₁₀-Alkylgruppe, vorzugsweise H oder CH3 ist,
Z, gleich oder verschieden, ein Abstandsarm ist, der aus einem Heteroatom oder einer Kohlenwasserstoffkette besteht, der mindestens ein lineares oder verzweigtes Heteroatom mit mindestens einem Kohlenstoffatom enthält, und
T, gleich oder verschieden, eine eingeengte Trapezgruppe zum Bestimmen der Konzentration des Epilammittels in einem Epilamisierungsbad ist.

9. Substrat nach Anspruch 8, **dadurch gekennzeichnet, dass** T, gleich oder verschieden, eine UV-Sensorgruppe oder ein Fluorphor ist.

10. Substrat nach irgendeinem der vorstehenden Ansprüche, **dadurch gekennzeichnet, dass** seine Oberfläche, von der mindestens ein Teil mit dem Epilammittel bedeckt ist, aus einem Material gefertigt ist, das ausgewählt ist aus der Gruppe, bestehend aus Metallen, Metalloxiden, Polymeren, Saphir, Rubinen, Siliziumoxiden, Siliziumlegierungen, Diamond-Like Carbons (DLC) und ihren Legierungen.

11. Verfahren zur Enthaarung mindestens eines Teils einer Oberfläche eines Substrats, das folgende Schritte umfasst:
- Herstellen eines Epilammittels, umfassend mindestens ein Copolymer gemäß den vorstehenden Ansprüchen,
- optional, Herstellen der Oberfläche des Substrats,
- Inkontaktbringen der Oberfläche des Substrats mit dem Epilammittel.

12. Verfahren zur Enthaarung nach Anspruch 11, **dadurch gekennzeichnet, dass** die Herstellung des Epilammittels durch Copolymerisation von Monomeren erfolgt, die in der Lage sind, die M-Einheiten mit Monomeren herzustellen, die in der Lage sind, die N-Einheiten zu bilden, vorzugsweise unter den Monomeren, die ausgewählt sind aus der Gruppe bestehend aus Acrylat-, Methacrylat-, Acrylamid-, Methacrylamid-, Vinyl-und Styrolmonomeren.

13. Verfahren zur Enthaarung nach irgendeinem der vorstehenden Ansprüche 11 bis 12, **dadurch gekennzeichnet, dass** der Epilamteil mindestens ein Copolymer gemäß den vorstehenden Ansprüchen 8 bis 9 umfasst, wobei die Herstellung des Epilammittels durch die Herstellung eines Epilamisierungsbades erfolgt, welches das Epilammittel enthält, wobei die Oberfläche des Substrats im Epilamisierungsbad mit dem Epilammittel im Epilamisierungsbad in Kontakt gebracht wird, und wobei das Verfahren optional, vor dem Inkontaktbringen, einen Schritt der Kontrolle der Epilammittelkonzentration im Epilamisierungsbad mithilfe Leittrasse und, optional, einen Schritt der Anpassung der Konzentration des Epilammittels im Epilamisierungsbad umfasst.

14. Verfahren zur Enthaarung nach irgendeinem der vorstehenden Ansprüche 11 bis 12, **dadurch gekennzeichnet, dass** der Schritt zum Inkontaktbringen der Oberfläche des Substrats mit dem Epilammittel die folgenden Schritte umfasst:
- Platzieren des Substrats und des Epilammittels in einem Gehäuse bei Umgebungsdruck,
- bei luftdichtem Verschluss des Gehäuses,
- Zugeben von CO₂ in das luftdicht verschlossene Gehäuse bei einem Druck zwischen 25 und 74 bar, vorzugsweise zwischen 45 und 70 bar, bei einer Temperatur zwischen 10 °C und 80 °C, vorzugsweise zwischen 15 °C und 50 °C,
- Senken des Drucks im Gehäuse und
- Ablassen des epilamisierten Substrats aus dem Gehäuse.

15. Verwenden eines Copolymers, umfassend die die M-Einheiten und N-Einheiten, die mit kovalenten Verbindungen über ihre Hauptkette verbunden sind, wobei
M 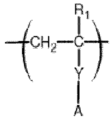 ist, N 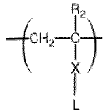 ist, wobei
R₁ und R₂, gleich oder verschieden, H sind, eine C₁-C₁₀-Alkylgruppe, eine C₂-C₁₀-Alkylgruppe, vorzugsweise H oder CH₃,
X und X, gleich oder verschieden, Grenzarme aus einem Heteroatom oder einer Kohlenwasserstoffkette sind, die mindestens ein lineares oder verzweigtes Heteroatom enthalten, das mindestens ein Kohlenstoffatom umfasst,
A, gleich oder verschieden, eine Verankerungsgruppe mit dem Substrat darstellt, L, gleich oder verschieden, eine halogenierte Ethergruppe gemäß der Formel (I) ist, 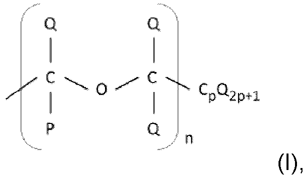 wobei
Q ein Halogenatom ist,
P, identisch oder unterschiedlich, eine C₁-C₁₀-Alkylgruppe oder eine C₂-C₁₀-Alkylgruppe mit mindestens einem Halogenatom ist und linear oder verzweigt ist,
p ausgewählt ist zwischen 1 und 10 und n ausgewählt ist zwischen 1 und 20,
als Epilammittel von mindestens einem Teil der Oberfläche eines Substrats.

## Claims

1. A substrate comprising a surface at least a portion of which is covered with an epilame agent, **characterised in that** said epilame agent comprises at least one compound in the form of a copolymer comprising units M and units N, associated by covalent bonds via their main chains, where
M is 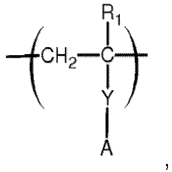 N is 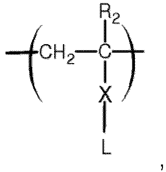 where
R₁ and R₂, which may be identical or different, are H, a C₁-C₁₀ alkyl group, a C₂-C₁₀ alkenyl group, and preferably H or CH₃,
X and Y, which may be identical or different, are spacer arms consisting of a heteroatom or a linear or branched hydrocarbon chain containing at least one heteroatom and comprising at least one carbon atom,
A, which may be identical or different, forms an anchoring group to the substrate,
L, which may be identical or different, is a halogenated ether group according to formula (I) 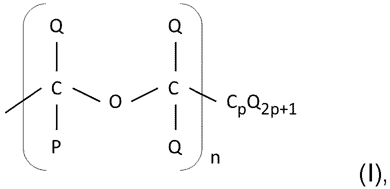 where
Q is a halogen atom,
P, which may be identical or different, is a C₁-C₁₀ alkyl group or a C₂-C₁₀ alkenyl group comprising at least one halogen atom and being linear or branched,
p is chosen between 1 and 4, preferably between 2 and 3, and
n is chosen between 1 and 20, preferably between 1 and 10.

2. The substrate according to claim 1, **characterised in that** the copolymer is a random copolymer and the units M and the units N are distributed randomly.

3. The substrate according to claim 1, **characterised in that** the copolymer is a block copolymer comprising at least one block of units M associated by covalent bonds via their main chains, and at least one block of units N associated by covalent bonds via their main chains, said blocks being bound together by covalent bonds via their main chains in linear sequences.

4. The substrate according to any one of the preceding claims, **characterised in that** L is an ether group which is at least a partially fluorinated, preferably totally fluorinated.

5. The substrate according to any one of the preceding claims, **characterised in that** A is selected from the group comprising glycidyl, thiols, thioethers, thioesters, sulphides, thioamides, silanols, alkoxysilanes, silane halides, hydroxyls, phosphates, protected or unprotected phosphonic acids, protected or unprotected phosphonates, amines, ammoniums, nitrogen heterocycles, carboxylic acids, anhydrides and catechols.

6. The substrate according to any one of the preceding claims, **characterised in that** X and Y, which may be identical or different, are selected from the group comprising C₁-C₂₀ ester groups, amide groups and groups derived from styrene, wherein X and Y, which may be identical or different, optionally comprise at least one heteroatom.

7. The substrate according to any one of the preceding claims, **characterised in that** the units N/units M ratio is between 1 and 20.

8. The substrate according to any one of the preceding claims, **characterised in that** the copolymer additionally comprises units V associated with the units M and N by covalent bonds via their main chains, where V is 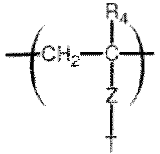 where
R₄, which may be identical or different, is H, a C₁-C₁₀ alkyl group, a C₂-C₁₀ alkenyl group, and preferably H or CH₃,
Z, which may be identical or different, is a spacer arm consisting of a heteroatom or a linear or branched hydrocarbon chain containing at least one heteroatom, comprising at least one carbon atom, and
T, which may be identical or different, is a tracer group arranged to determine the concentration of epilame agent in an epilame-coating bath.

9. The substrate according to claim 8, **characterised in that** T, which may be identical or different, is a UV absorber group or a fluorophore.

10. The substrate according to any one of the preceding claims, **characterised in that** its surface, at least a portion of which is covered with the epilame agent, is made of a material selected from the group comprising metals, metal oxides, polymers, sapphire, ruby, silicon, silicon oxides, silicon nitrides, silicon carbides, diamond like carbon (DLC) and alloys thereof.

11. A method for epilame-coating at least a portion of a surface of a substrate comprising the steps of:
- preparing an epilame agent comprising at least one copolymer as defined in the preceding claims,
- optionally, preparing the surface of the substrate,
- contacting the surface of the substrate with the epilame agent.

12. The method for epilame-coating according to claim 11, **characterised in that** the preparation of the epilame agent is carried out by copolymerisation of monomers capable of forming the units M with monomers capable of forming the units **N,** preferably wherein the monomers selected from the group comprising acrylate, methacrylate, acrylamide, methacrylamide, vinyl and styrene monomers.

13. The method for epilame-coating according to any one of claims 11 to 12, **characterised in that** the epilame agent comprises at least one copolymer as defined in claims 8 to 9, the epilame agent is prepared by preparing an epilame-coating bath containing the epilame agent, the surface of the substrate is contacted with the epilame agent in the epilame-coating bath, and the method optionally comprises, before contacting, a step of controlling the concentration of epilame agent in the epilame-coating bath by means of the tracer group and, optionally, a step of readjusting the concentration of epilame agent in the epilame-coating bath.

14. The epilame-coating method according to any one of claims 11 to 12, **characterised in that** the step of contacting the surface of the substrate with the epilame agent comprises the steps of:
- placing the substrate and the epilame agent in an enclosure at ambient pressure,
- hermetically sealing the enclosure,
- CO₂ at a pressure comprised between 25 bar and 74 bar, preferably between 45 bar and 70 bar, and at a temperature comprised between 10°C and 80°C, preferably between 15°C and 50°C is introduced into the hermetically sealed enclosure,
- reducing the pressure in the enclosure, and
- removing the epilame-coated substrate from the enclosure.

15. A use of a copolymer comprising units M and units N, associated by covalent bonds via their main chains, wherein
M is 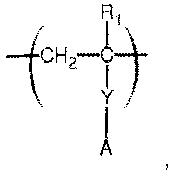 N is 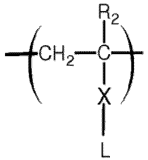 , where
R₁ and R₂, which may be identical or different, are H, a C₁-C₁₀ alkyl group, a C₂-C₁₀ alkenyl group, and preferably H or CH₃,
X and Y, which may be identical or different, are spacer arms consisting of a heteroatom or a linear or branched hydrocarbon chain containing at least one heteroatom and comprising at least one carbon atom,
A, which may be identical or different, forms an anchoring group to the substrate,
L, which may be identical or different, is a halogenated ether group according to formula (I) 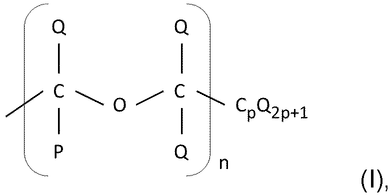 where
Q is a halogen atom,
P, which may be identical or different, is a C₁-C₁₀ alkyl group or a C₂-C₁₀ alkenyl group comprising at least one halogen atom and being linear or branched,
p is chosen between 1 and 10, and n is chosen between 1 and 20,
as an epilame agent of at least a portion of a surface of a substrate.
